# FASCICULE DE BREVET EUROPEEN

(11) **EP 3 535 479 B1**
(45) Date de publication et mention de la délivrance du brevet: **25.01.2023**
(21) Numéro de dépôt: 17801074.0
(22) Date de dépôt: 27.10.2017
(51) Int. Cl.: F01D 11/24

(54) **DISPOSITIF DE REFROIDISSEMENT POUR UNE TURBINE D'UNE TURBOMACHINE**
KÜHLVORRICHTUNG FÜR EINE TURBINE EINER TURBOMASCHINE
COOLING DEVICE FOR A TURBINE OF A TURBOMACHINE

(30) Priorité: 04.11.2016 FR 1660708
(43) Date de publication de la demande: 11.09.2019
(73) Titulaire: Safran Aircraft Engines, 75015 Paris (FR)
(72) Inventeur: JOUY, Baptiste, Marie, Aubin, Pierre, 77550 Moissy-Cramayel (FR); CONTINI, Nicolas, 77550 Moissy-Cramayel (FR); DOUBLIER, Arnaud, 77550 Moissy-Cramayel (FR); DUBOIS DOROGI, Vincent, 77550 Moissy-Cramayel (FR); PRESTEL, Sébastien, Jean, Laurent, 77550 Moissy-Cramayel (FR)
(74) Mandataire: Ernest Gutmann - Yves Plasseraud S.A.S.
(86) Numéro de dépôt international: PCT/FR2017/052964
(87) Numéro de publication internationale: WO 2018/083403

(56) Documents cités:
- EP-A2- 1 798 382
- EP-A2- 2 236 772
- US-A- 5 399 066
- US-A1- 2010 139 288

## Description

La présente invention concerne un dispositif de refroidissement pour une turbine d'une turbomachine, telle par exemple qu'un turboréacteur d'avion, en particulier un turboréacteur à double flux.

Un turboréacteur à double flux comporte classiquement une soufflante en aval de laquelle s'étend :
- une veine primaire dans laquelle s'écoule un flux primaire, ladite veine primaire traversant notamment, dans le sens d'écoulement du flux primaire, un compresseur basse-pression, un compresseur haute-pression, une chambre de combustion, une turbine haute-pression et une turbine basse-pression, la veine primaire étant délimitée extérieurement au niveau de la turbine par un carter de turbine,
- une veine secondaire dans laquelle s'écoule un flux secondaire distinct du flux primaire.

La turbine basse-pression comporte en particulier différents étages successifs comportant des roues mobiles et des parties fixes. La roue mobile comporte un disque au niveau duquel sont montées des aubes. Les extrémités des aubes sont entourées d'un anneau fixe en matériau abradable, ledit anneau étant fixé sur le carter de la turbine. Afin de garantir un rendement élevé de la turbomachine, il convient de limiter le flux d'air ne traversant pas les roues mobiles des différents étages, c'est-à-dire de limiter les fuites entre les extrémités radialement externes des aubes et l'anneau en matériau abradable. Pour cela, il convient de contrôler le jeu au niveau de cette interface, ce jeu étant fortement dépendant de la température des parties fixes supportant l'anneau et en regard des extrémités radialement externes des aubes.

Le flux d'air primaire issu de la chambre de combustion présente une température très élevée et échauffe les parties situées en aval, telles que les parties fixes et mobiles de la turbine.

Afin de maîtriser le jeu précité et d'éviter toute dégradation prématurée des différentes parties fixes et mobiles de la turbine, il est nécessaire de prévoir des moyens de refroidissement efficaces pouvant s'intégrer aisément dans l'environnement de la turbomachine.

La demande de brevet FR 2 867 806, au nom de la Demanderesse, divulgue un dispositif de refroidissement d'un carter de turbine pour une turbomachine comportant des moyens de prélèvement et d'amenée d'air et des moyens de distribution de l'air prélevé comprenant des rampes s'étendant circonférentiellement autour de l'axe de la turbomachine. Les rampes sont reliées aux moyens de prélèvement et d'amenée d'air par des zones de liaison également appelées collecteurs. Chaque rampe comporte des orifices répartis le long de la rampe, l'air prélevé étant destiné à s'échapper desdits orifices pour refroidir le carter.

Les orifices sont uniformément répartis le long de chaque rampe de façon à avoir un débit relativement uniforme sur toute la circonférence du carter.

Il a été constaté que l'air circulant dans les rampes est chauffé par son environnement au fur et à mesure qu'il progresse le long de la rampe, c'est-à-dire au fur et à mesure qu'il s'éloigne du collecteur par lequel l'air débouche dans la rampe. Les écarts de température de l'air traversant la zone de la rampe située à proximité du collecteur et l'air traversant la zone de la rampe éloignée de la zone de liaison peuvent être supérieurs à 200°C par exemple. Les zones du carter situées à distance des collecteurs sont ainsi moins bien refroidies et sont soumises à des contraintes thermiques importantes. Il en résulte une perte de rendement lié à l'augmentation des jeux au niveau des zones du carter moins refroidies.

Afin d'éviter cela, il est possible d'augmenter le nombre de collecteurs répartis sur la circonférence du carter. Ceci permet en effet de réduire les écarts de température au sein des rampes. Une telle solution pénalise cependant le poids de la turbomachine.

La demande de brevet FR 2 416 345 divulgue un dispositif de refroidissement comportant des tôles assemblées les unes aux autres, montées radialement à l'extérieur d'un anneau en matériau abradable. Les tôles délimitent entre elles des canaux de circulation d'air de refroidissement comportant des orifices d'éjection d'air, tournés en direction de l'anneau de matériau abradable, de façon à le refroidir. Cette structure de dispositif de refroidissement permet d'augmenter le nombre de collecteurs sans augmentation excessive de masse.

Il a été cependant constaté que les tôles isolent la zone située entre lesdites tôles et l'abradable et restreignent la circulation de l'air dans cette zone, limitant ainsi la dissipation thermique de sorte que les zones sont relativement chaudes, ce qui est néfaste pour leur durée de vie et empêche plus généralement un refroidissement efficace de la zone concernée. Il en résulte une diminution du refroidissement du carter dans les zones où la dissipation thermique est limitée, et un impact sur le rendement de la turbomachine.

La demande EP2 236 772 A2 divulgue un dispositif selon le préambule de la revendication 1.

L'invention a notamment pour but d'apporter une solution simple, efficace et économique à ce problème.

A cet effet, elle propose un dispositif de refroidissement pour une turbine d'une turbomachine selon la revendication 1.

Le diamètre des orifices d'éjection d'air des tôles est par exemple compris entre 0.5 et 1 mm.

Chaque conduit de refroidissement peut comporter au moins une série d'orifices d'éjection de l'air de refroidissement, tournés en regard des tôles.

L'air issu du conduit refroidit ainsi les tôles par impact, de façon à obtenir une homogénéité des températures des tôles. En particulier, le conduit de refroidissement permet de refroidir les tôles au niveau des extrémités circonférentielles des canaux, c'est-à-dire dans les zones où les tôles sont les plus chaudes. De cette manière, la température de l'air de refroidissement circulant au sein de la zone de liaison puis des canaux reste relativement uniforme tout au long de son parcours. Un meilleur refroidissement des tôles permet également de faciliter le rayonnement thermique du carter à refroidir vers les canaux de refroidissement, ce qui permet d'évacuer efficacement les calories et contribue à un refroidissement uniforme et efficace du carter. Un tel refroidissement uniforme du carter permet de réduire les effets de dilatations différentielles et, ainsi, les contraintes thermiques et mécaniques générées dans le carter, de façon à augmenter sa durée de vie.

La zone de liaison correspond à un distributeur ou à un collecteur d'air, alimentant les différents canaux.

Le conduit s'étend axialement et croise ainsi les canaux de refroidissement. Il est à noter que le terme « axial » couvre également le cas où le conduit s'étend de façon oblique par rapport à l'axe de la turbomachine, pour autant qu'il existe une composante axiale permettant audit conduit de croiser les canaux de refroidissement.

Les orifices sont par exemple dimensionnés de façon à obtenir une vitesse d'éjection de l'air qui est importante. Le diamètre des orifices du conduit est par exemple compris entre 0.5 et 1 mm.

Chaque conduit peut comporter plusieurs séries d'orifices d'éjection d'air de refroidissement, chaque série s'étendant selon une ligne, les lignes des différentes séries étant parallèles les unes des autres, au moins partiellement.

On améliore ainsi la répartition de l'air de refroidissement sur les tôles à refroidir.

Chaque conduit de refroidissement peut être en contact avec l'une au moins des tôles, de façon à échanger de la chaleur notamment par conduction entre le conduit et la tôle. Dans ce cas, le conduit de refroidissement est de préférence réalisé dans un matériau qui est un bon conducteur thermique.

Une telle forme de réalisation peut permettre de réduire l'encombrement du dispositif de refroidissement.

Bien entendu, il est possible de cumuler les échanges de chaleur par contact entre le conduit et les tôles, et les échanges de chaleur par impact d'un flux d'air issus d'orifices d'éjection du conduit sur les tôles.

Selon une variante non couverte par les revendications, chaque conduit peut être inséré entre les deux tôles assemblées l'une à l'autre.

Dans ce cas, les conduits sont noyés entre les tôles.

Le dispositif peut comporter au moins une tôle radialement interne et au moins une tôle radialement externe, assemblées l'une à l'autre de façon à former une virole destinée à entourer une zone à refroidir.

La virole s'étend ainsi sur 360°. Elle peut être sectorisée.

Les deux tôles peuvent comporter au moins une zone où les tôles sont écartées l'une de l'autre de façon à délimiter un canal, et des zones où les tôles sont assemblées de façon étanche l'une à l'autre.

Dans ce cas, les tôles peuvent comporter des orifices d'évacuation d'air traversant les deux tôles, situés dans les zones où les tôles sont assemblées l'une à l'autre. Les orifices permettent d'évacuer de l'air chaud se trouvant radialement à l'intérieur des tôles, vers une zone située radialement à l'extérieur des tôles.

Les tôles peuvent définir au moins une zone de liaison destinée à recevoir de l'air de refroidissement, à partir de laquelle s'étendent au moins deux canaux de circulation d'air de refroidissement.

La section de chaque conduit de refroidissement est comprise entre 70 mm² et 500 mm², la section de chaque canal de circulation d'air de refroidissement étant comprise entre 70 mm² et 500 mm².

Une telle section permet un refroidissement efficace tout en limitant la masse du dispositif.

Chaque conduit de refroidissement peut être écarté radialement de la tôle radialement externe, d'une distance comprise entre 3 et 6 mm.

L'invention concerne de plus un ensemble pour une turbine de turbomachine, comportant au moins deux dispositifs du type précité, régulièrement répartis autour de l'axe de la turbomachine, de préférence entre deux et cinq dispositifs.

Dans ce cas, les tôles peuvent se présenter sous la forme de secteurs angulaires. Les différents secteurs peuvent être reliés ou fixés les uns aux autres, par exemple par soudage. Les différents secteurs angulaires peuvent former un ensemble annulaire dont les tôles des différents secteurs peuvent être formées de façon monobloc. L'ensemble peut alors comporter une tôle annulaire interne monobloc et une tôle annulaire externe monobloc, les tôles délimitant plusieurs zones de liaison réparties sur la circonférence, des canaux s'étendant circonférentiellement depuis chaque zone de liaison.

Une telle structure permet de limiter le débit d'air de refroidissement circulant dans chaque zone de liaison et dans chaque canal de refroidissement, le flux d'air de refroidissement étant partagé entre les différentes zones de liaison ou canaux. Ceci permet de réduire les pertes de charge et donc d'améliorer l'efficacité du refroidissement du carter.

L'invention concerne également, un turboréacteur à double flux, comportant une soufflante en aval de laquelle s'étend :
- une veine primaire dans laquelle s'écoule un flux primaire, ladite veine primaire traversant notamment, dans le sens d'écoulement du flux primaire, un compresseur, une chambre de combustion et une turbine comportant un carter de turbine,
- une veine secondaire dans laquelle s'écoule un flux secondaire distinct du flux primaire,
caractérisé en ce que la turbine comporte un dispositif de refroidissement du type précité, situé radialement à l'extérieur du carter, des moyens de prélèvement et d'amenée d'air étant aptes à prélever de l'air issu de la veine secondaire et le diriger dans chaque canal de circulation d'air de refroidissement et dans le conduit de refroidissement du dispositif.

Le flux d'air secondaire ne traverse pas le compresseur et la chambre de combustion, de sorte qu'il est à une température relativement basse. Cet air peut donc être prélevé et utilisé pour refroidir efficacement la zone souhaitée de la turbine.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe axiale d'une partie d'un réacteur à double flux selon une forme de réalisation de l'invention,
- la figure 2 est une vue en perspective d'un dispositif de refroidissement,
- la figure 3 est une vue schématique d'une partie du dispositif, selon une forme de réalisation,
- la figure 4 est une vue en section d'une partie du dispositif de la figure 3,
- la figure 5 est une vue correspondant à la figure 3, illustrant une autre forme de réalisation,
- la figure 6 est une vue correspondant à la figure 3, illustrant encore une autre forme de réalisation,
- la figure 7 est une vue en section d'une partie du dispositif de la figure 6.

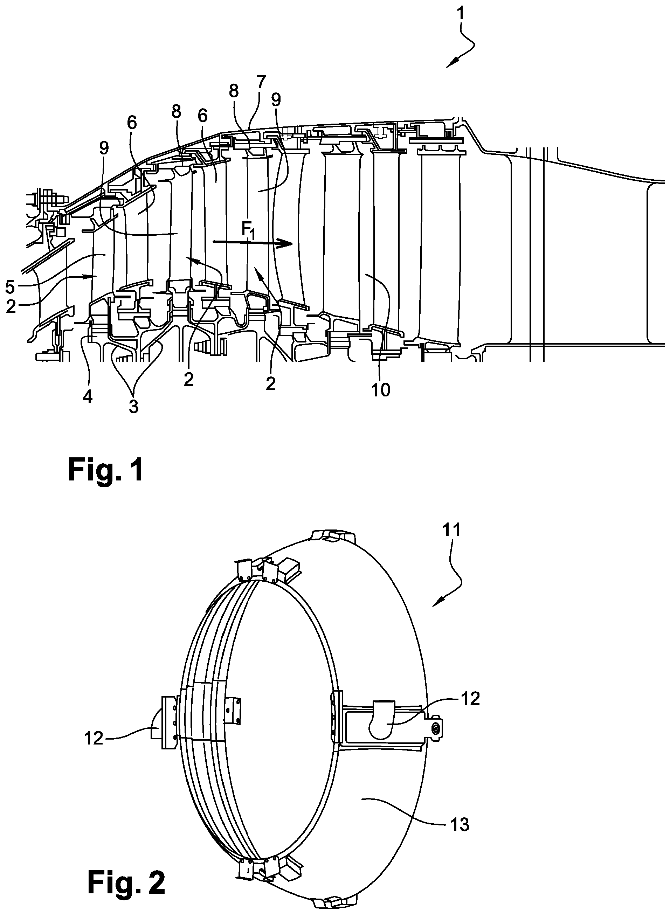

La figure 1 illustre une partie d'un turboréacteur à double flux selon l'invention, en particulier la turbine basse pression 1. Celle-ci comporte un rotor comportant des roues 2 assemblées axialement les unes aux autres par des brides annulaires 3 et comportant chacune un disque 4 portant des aubes 5.

Entre les roues mobiles 2 se trouvent des rangées annulaires d'aubes fixes 6 qui sont montées par des moyens appropriés à leurs extrémités radialement externes sur un carter 7 de la turbine basse-pression 1.

Un anneau 8 portant un matériau abradable entoure la périphérie externe des aubes 9 de chaque roue mobile 2.

Comme indiqué précédemment, le flux d'air primaire F1 issu de la chambre de combustion et s'écoulant dans la veine primaire 10 échauffe de façon importante le carter 7 et les anneaux 8.

Afin d'assurer le refroidissement du carter 7, le turboréacteur comporte un dispositif de refroidissement 11 non représenté à la figure 1 mais visible aux figures 2 à 4.

Celui-ci comporte des moyens de prélèvement et d'amenée d'air comprenant une écope comportant une ouverture débouchant par exemple dans la veine secondaire du turboréacteur afin d'y prélever de l'air froid, et des organes de raccordement ou de distribution comportant notamment des zones coudées 12. Les moyens de prélèvement et d'amenée d'air comportent également une vanne de régulation apte à être commandée en fonction du régime moteur et/ou des conditions de vol par exemple, de manière à ajuster le débit prélevé.

Le dispositif 11 comporte une virole 13 formée par l'assemblage d'au moins deux tôles 14, 15, respectivement une tôle radialement interne 14 et une tôle radialement externe 15. Les tôles 14, 15 sont annulaires.

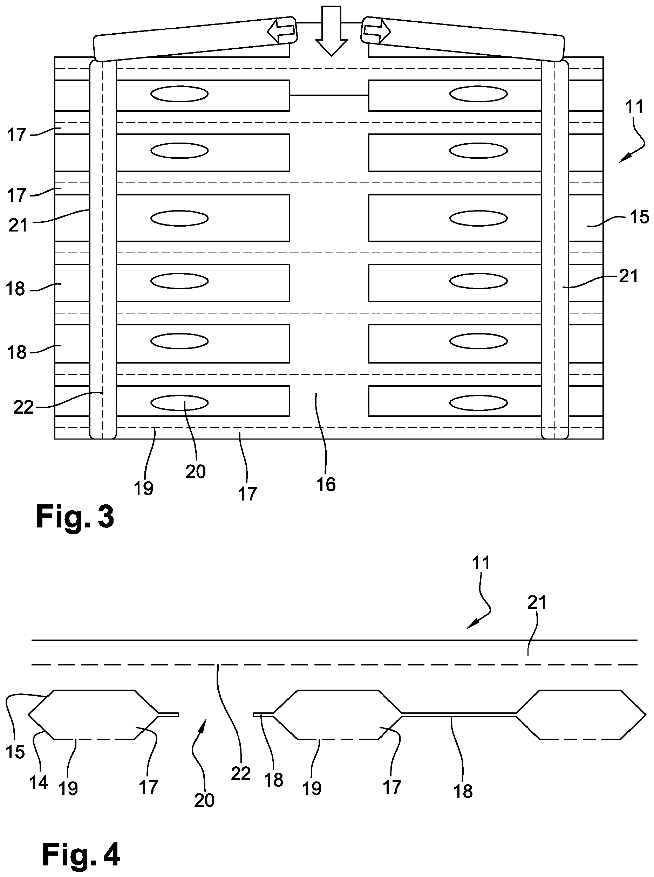

Comme cela est mieux visible à la figure 4, les tôles 14, 15 comportent des zones où les tôles 14, 15 sont écartées l'une de l'autre de façon à délimiter des zones de liaisons 16 et des canaux 17 de circulation d'air de refroidissement, et des zones 18 où les tôles 14, 15 sont assemblées de façon étanche l'une à l'autre.

Chaque zone de liaison 16 est destinée à recevoir de l'air de refroidissement issu des moyens de prélèvement et d'amenée d'air, plusieurs canaux 17 de circulation d'air de refroidissement s'étendent circonférentiellement depuis chaque zone de liaison 16, par exemple circonférentiellement de part et d'autre de chaque zone de liaison 16. La forme, la répartition et les dimensions des zones de liaison 16 et des canaux 17 peuvent varier en fonction des applications.

Chaque canal 17 comporte des orifices d'éjection d'air 19 tournés en regard des zones à refroidir, telles que le carter de turbine 7, de façon à ce que l'air de refroidissement circulant dans les canaux 17 soit éjecté par les orifices 19 et impacte la zone à refroidir.

Les tôles 14, 15 comportent des orifices d'évacuation d'air 20 traversant les deux tôles 14, 15, situés dans les zones 18 où les tôles 14, 15 sont assemblées l'une à l'autre. Les orifices 20 permettent d'évacuer de l'air chaud se trouvant radialement à l'intérieur des tôles 14, 15, vers une zone située radialement à l'extérieur des tôles 14, 15.

Le dispositif de refroidissement comporte en outre des conduits 21 traversés par de l'air de refroidissement issu des moyens de prélèvement et d'amenée d'air, lesdits conduits 21 comportant des orifices d'éjection 22 tournés en regard des tôles 14, 15. L'air de refroidissement traversant les conduits 21 et éjecté par lesdits orifices 22 vient impacter la tôle radialement externe 15, de manière à refroidir efficacement les tôles 14, 15.

La forme, les dimensions et la répartition des conduits 21 peuvent varier en fonction des applications. Dans la forme représentée aux figures 3 et 4, chaque zone de liaison 16 s'étend selon un axe, à savoir l'axe de la turbomachine, chaque conduit 21 s'étendant selon un axe parallèle à la zone de liaison 16. Les canaux 17 s'étendent, au moins en partie, perpendiculairement à l'axe de la zone de liaison 16.

Chaque conduit de refroidissement peut être écarté radialement de la tôle radialement externe 15, d'une distance comprise entre 3 et 6 mm.

Les orifices d'éjection 19 de chaque canal 17 peuvent être répartis selon une ligne correspondant à l'axe dudit canal 17. Par ailleurs, les orifices d'éjection 22 de chaque conduit 21 peuvent être répartis selon un axe correspondant à l'axe du conduit 21.

Le diamètre des orifices d'éjection d'air 19 des tôles 14, 15 est par exemple compris entre 0.5 et 1 mm.

Le diamètre des orifices d'éjection d'air 22 des conduits 21 est par exemple compris entre 0.5 et 1 mm.

Les conduits 21 ont par exemple une section circulaire, de diamètre compris entre 0.5 et 1 mm.

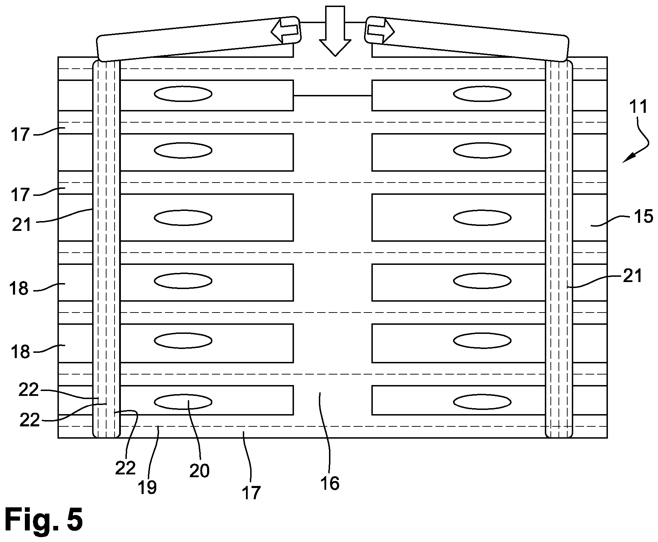

Selon une forme de réalisation représentée à la figure 5, chaque conduit 21 peut comporter plusieurs séries d'orifices d'éjection d'air 22 de refroidissement, par exemple trois séries, chaque série s'étendant selon une ligne, les lignes des différentes séries étant parallèles les unes des autres, au moins partiellement. De plus, les orifices de chaque série peuvent également être répartis de manière quinconcée.

On améliore ainsi la répartition de l'air de refroidissement sur les tôles 14, 15 et on augmente le débit d'air venant impacter les tôles 14, 15.

Dans ces formes de réalisation, les conduits 21 peuvent être formés par des tuyaux ou des canalisations qui peuvent être fixées aux tôles 14, 15, par exemple par l'intermédiaire de supports ou d'entretoises.

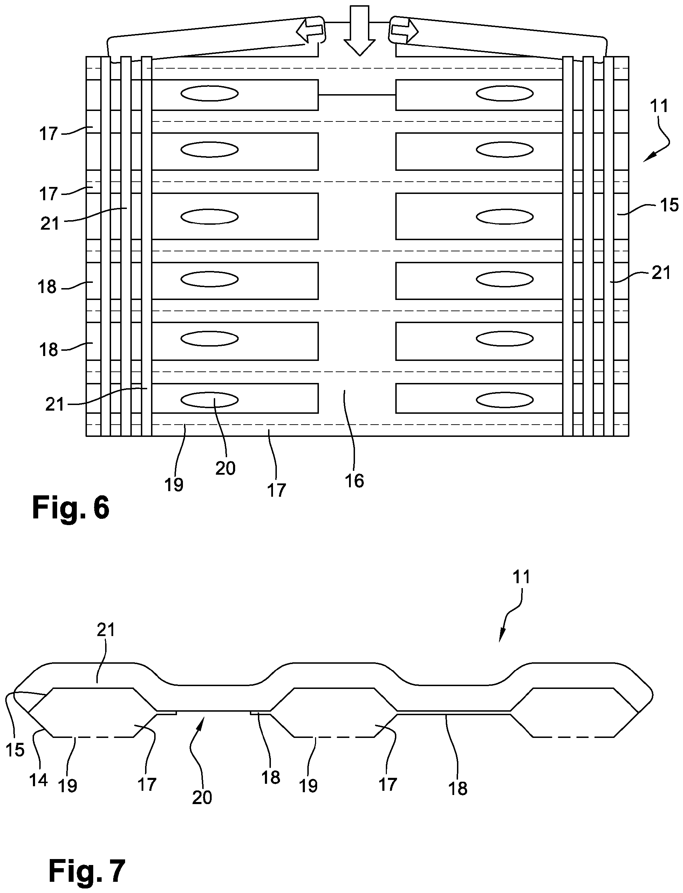

Les figures 6 et 7 représentent une forme de réalisation où les conduits 21 viennent au contact de l'une au moins des tôles 14, 15, par exemple au contact de la tôle radialement externe 15. Chaque conduit 21 est par exemple soudé à la tôle correspondante 15. Le conduit 21 peut alors être dépourvu d'orifice d'éjection, l'échange de chaleur étant réalisé par conduction thermique.

Le diamètre de chaque conduit 21 est de préférence relativement faible, par exemple compris entre 5 et 15 mm, de manière à maximiser les échanges thermiques par conduction. La section de chaque conduit 21 peut également être adaptée à la tôle concernée 15 de façon à maximiser la section de contact.

Selon une variante non représentée et non couverte par les revendications, chaque conduit 21 vient au contact de la tôle intérieure 14 ou est inséré entre les deux tôles 14, 15.

## Revendications

1. Dispositif de refroidissement (11) pour une turbine d'une turbomachine s'étendant selon un axe, comprenant au moins une tôle radialement interne (14) et une tôle radialement externe (15) assemblées l'une à l'autre et délimitant entre elles des canaux (17) de circulation d'air de refroidissement s'étendant circonférentiellement depuis une zone de liaison (16), chaque canal (17) comportant au moins une arrivée d'air et des orifices d'éjection d'air (19), destinés à être tournés en regard d'une zone à refroidir, **caractérisé en ce qu'**il comporte des moyens de refroidissement desdites tôles (14, 15) comprenant au moins un conduit de refroidissement (21) destiné à la circulation d'air de refroidissement, ledit au moins un conduit (21) étant situé radialement à l'extérieur desdites tôles (14, 15) et à proximité ou en contact desdites tôles (14, 15) de façon à assurer un refroidissement desdites tôles (14, 15) par l'air de refroidissement circulant dans le au moins un conduit (21), le au moins un conduit de refroidissement (21) s'étendant axialement et étant disposé en regard des zones d'extrémité circonférentielle des canaux (17), le au moins un conduit de refroidissement (21) étant formé par au moins un tuyau ou une conduite fixée aux tôles, chacun des au moins un conduit de refroidissement (21) comportant au moins une série d'orifices (22) d'éjection de l'air de refroidissement, tournés en regard des tôles (14, 15).

2. Dispositif selon la revendication 1, **caractérisé en ce que** chaque conduit (21) comporte plusieurs séries d'orifices (22) d'éjection d'air de refroidissement, chaque série s'étendant selon une ligne, les lignes des différentes séries étant parallèles les unes des autres, au moins partiellement.

3. Dispositif selon la revendication 1 ou 2, **caractérisé en ce que** chaque conduit de refroidissement (21) est en contact avec l'une au moins des tôles (14, 15), de façon à échanger de la chaleur notamment par conduction entre le conduit la tôle (15).

4. Dispositif selon l'une des revendications 1 à 3, **caractérisé en ce qu'**il comporte au moins une tôle radialement interne (14) et au moins une tôle radialement externe (15), assemblées l'une à l'autre de façon à former une virole destinée à entourer une zone à refroidir.

5. Dispositif selon l'une des revendications 1 à 4, **caractérisé en ce que** les deux tôles (14, 15) comportent au moins une zone (16, 17) où les tôles (14, 15) sont écartées l'une de l'autre de façon à délimiter un canal, et des zones (18) où les tôles (14, 15) sont assemblées de façon étanche l'une à l'autre.

6. Dispositif selon la revendication 5, **caractérisé en ce que** les tôles (14, 15) comportent des orifices d'évacuation d'air (20) traversant les deux tôles (14, 15), situés dans les zones (18) où les tôles (14, 15) sont assemblées l'une à l'autre.

7. Dispositif selon l'une des revendications 1 à 6, **caractérisé en ce que** les tôles (14, 15) définissent au moins une zone de liaison (16) destinée à recevoir de l'air de refroidissement, à partir de laquelle s'étendent au moins deux canaux de circulation d'air de refroidissement (17).

8. Dispositif selon l'une des revendications 1 à 7, **caractérisé en ce que** la section de chaque conduit de refroidissement (21) est comprise entre 70 mm² et 500 mm², la section de chaque canal de circulation d'air de refroidissement (17) étant comprise entre 70 mm² et 500 mm².

9. Ensemble pour une turbine de turbomachine, comportant au moins deux dispositifs selon l'une des revendications 1 à 8, régulièrement répartis autour de l'axe de la turbomachine, de préférence entre deux et cinq dispositifs.

10. Turboréacteur à double flux, comportant une soufflante en aval de laquelle s'étend :
- une veine primaire (8) dans laquelle s'écoule un flux primaire (F1), ladite veine primaire (8) traversant notamment, dans le sens d'écoulement du flux primaire (F1), un compresseur, une chambre de combustion et une turbine (1) comportant un carter de turbine (7),
- une veine secondaire dans laquelle s'écoule un flux secondaire distinct du flux primaire,
**caractérisé en ce que** la turbine comporte un dispositif de refroidissement (11) selon l'une des revendications 1 à 8, situé radialement à l'extérieur du carter (7), des moyens de prélèvement et d'amenée d'air étant aptes à prélever de l'air issu de la veine secondaire et le diriger dans chaque canal (17) de circulation d'air de refroidissement et dans le conduit de refroidissement (21) du dispositif (11).

## Patentansprüche

1. Kühlvorrichtung (11) für eine Turbine eines Turbotriebwerks, die sich entlang einer Achse erstreckt, enthaltend zumindest ein radial inneres Blech (14) und ein radial äußeres Blech (15), die zusammengefügt sind und zwischen sich Kanäle (17) zur Zirkulation von Kühlluft begrenzen, die sich von einem Verbindungsbereich (16) aus in Umfangsrichtung erstrecken, wobei jeder Kanal (17) zumindest einen Lufteinlass und Luftausstoßöffnungen (19) aufweist, die dazu bestimmt sind, einem zu kühlenden Bereich zugewandt zu liegen,
**dadurch gekennzeichnet, dass** sie Mittel zum Kühlen der Bleche (14, 15) umfasst, die zumindest eine für die Zirkulation von Kühlluft bestimmte Kühlleitung (21) aufweisen, wobei sich die zumindest eine Leitung (21) radial außerhalb der Bleche (14, 15) und in der Nähe oder in Kontakt mit den Blechen (14, 15) befindet, so dass sie eine Kühlung der Bleche (14, 15) durch die in der zumindest einen Leitung (21) zirkulierende Kühlluft gewährleistet, wobei die zumindest eine Kühlleitung (21) axial verläuft und den Umfangsendbereichen der Kanäle (17) gegenüberliegend angeordnet ist, wobei die zumindest eine Kühlleitung (21) aus zumindest einer Röhre oder Rohrleitung gebildet ist, die an die Bleche befestigt ist, wobei jede der zumindest einen Kühlleitung (21) zumindest eine Reihe von Öffnungen (22) zum Ausstoßen der Kühlluft aufweist, die den Blechen (14, 15) zugewandt sind.

2. Vorrichtung nach Anspruch 1,
**dadurch gekennzeichnet, dass** jede Leitung (21) mehrere Reihen von Kühlluftausstoßöffnungen (22) umfasst, wobei sich jede Reihe entlang einer Linie erstreckt und die Linien der verschiedenen Reihen zumindest teilweise parallel zueinander verlaufen.

3. Vorrichtung nach Anspruch 1 oder 2,
**dadurch gekennzeichnet, dass** jede Kühlleitung (21) mit zumindest einem der Bleche (14, 15) in Kontakt steht, so dass Wärme insbesondere durch Wärmeleitung zwischen der Leitung und dem Blech (15) ausgetauscht wird.

4. Vorrichtung nach einem der Ansprüche 1 bis 3,
**dadurch gekennzeichnet, dass** sie zumindest ein radial inneres Blech (14) und zumindest ein radial äußeres Blech (15) aufweist, die so zusammengefügt sind, dass sie einen Mantelring bilden, der dazu bestimmt ist, einen zu kühlenden Bereich zu umschließen.

5. Vorrichtung nach einem der Ansprüche 1 bis 4,
**dadurch gekennzeichnet, dass** die beiden Bleche (14, 15) zumindest einen Bereich (16, 17), in dem die Bleche (14, 15) voneinander beabstandet sind, um einen Kanal zu begrenzen, und Bereiche (18), in denen die Bleche (14, 15) abgedichtet zusammengefügt sind, aufweisen.

6. Vorrichtung nach Anspruch 5,
**dadurch gekennzeichnet, dass** die Bleche (14, 15) Luftauslassöffnungen (20) aufweisen, die durch beide Bleche (14, 15) hindurchgehen und sich in den Bereichen (18) befinden, in denen die Bleche (14, 15) zusammengefügt sind.

7. Vorrichtung nach einem der Ansprüche 1 bis 6,
**dadurch gekennzeichnet, dass** die Bleche (14, 15) zumindest einen Verbindungsbereich (16) zur Aufnahme von Kühlluft definieren, von dem aus sich zumindest zwei Kühlluftzirkulationskanäle (17) erstrecken.

8. Vorrichtung nach einem der Ansprüche 1 bis 7,
**dadurch gekennzeichnet, dass** der Querschnitt jeder Kühlleitung (21) zwischen 70 mm² und 500 mm² beträgt, wobei der Querschnitt jedes Kühlluftzirkulationskanals (17) zwischen 70 mm² und 500 mm² beträgt.

9. Anordnung für eine Turbine eines Turbotriebwerks, enthaltend zumindest zwei Vorrichtungen nach einem der Ansprüche 1 bis 8, die gleichmäßig um die Achse des Turbotriebwerks verteilt sind, vorzugsweise zwischen zwei und fünf Vorrichtungen.

10. Mantelstromtriebwerk mit einem Gebläse, dem nachgelagert sind:
- ein Primärströmungskanal (8), in dem ein Primärstrom (F1) strömt, wobei insbesondere der Primärströmungskanal (8) in Strömungsrichtung des Primärstroms (F1) einen Verdichter, eine Brennkammer und eine Turbine (1) mit einem Turbinengehäuse (7) durchquert,
- ein Sekundärströmungskanal, in dem ein vom Primärstrom verschiedener Sekundärstrom strömt,
**dadurch gekennzeichnet, dass** die Turbine eine Kühlvorrichtung (11) nach einem der Ansprüche 1 bis 8 aufweist, die sich radial außerhalb des Gehäuses (7) befindet, wobei Mittel zur Luftentnahme und -zufuhr dazu geeignet sind, Luft aus dem Sekundärströmungskanal zu entnehmen und sie in jeden Kühlluftzirkulationskanal (17) und in die Kühlleitung (21) der Vorrichtung (11) zu leiten.

## Claims

1. A cooling device (11) for a turbine of a turbomachine extending along an axis, comprising at least one radially inner metal sheet (14) and one radially outer metal sheet (15) that are joined to one another and delimit, between them, cooling air circulation channels (17) extending circumferentially from a connection region (16), each channel (17) comprising at least one air inlet and air ejection orifices (19), that are designed to be oriented toward a region that is to be cooled, **characterized in that** it comprises means for cooling said metal sheets (14, 15) comprising at least one cooling duct (21) intended for the circulation of cooling air, said at least one duct (21) being located radially outside said metal sheets (14, 15) and close to or in contact with said metal sheets (14, 15) so as to cool said metal sheets (14, 15) using the cooling air circulating in the at least one duct (21), the at least one cooling duct (21) extending axially and being arranged toward the circumferential end regions of the channels (17), the at least one cooling duct (21) being formed by at least one pipe or a duct attached to the metal sheets, each of said at least one cooling duct (21) comprises at least one series of cooling air ejection orifices (22) oriented toward the metal sheets (14, 15).

2. A device according to claim 1, **characterized in that** each duct (21) comprises a plurality of series of cooling air ejection orifices (22), each series extending along a line, the lines of the different series being, at least partially, parallel to each other.

3. A device according to claim 1 or 2, **characterized in that** each cooling duct (21) is in contact with at least one of the metal sheets (14, 15), so as to exchange heat, in particular by conduction between the duct and the metal sheet (15).

4. A device according to one of claims 1 to 3, **characterized in that** it comprises at least one radially inner metal sheet (14) and at least one radially outer metal sheet (15), that are joined to one another so as to form a shroud intended to surround a region that is to be cooled.

5. A device according to one of claims 1 to 4, **characterized in that** the two metal sheets (14, 15) comprise at least one region (16, 17) where the metal sheets (14, 15) are spaced apart from each other in order to delimit a channel, and regions (18) where the metal sheets (14, 15) are sealingly joined to one another.

6. A device according to claim 5, **characterized in that** the metal sheets (14, 15) comprise air ejection orifices (20) passing through the two metal sheets (14, 15), located in the regions (18) where the metal sheets (14, 15) are joined to one another.

7. A device according to one of claims 1 to 6, **characterized in that** the metal sheets (14, 15) define at least one connection region (16) for receiving cooling air, from which at least two cooling air circulation channels (17) extend.

8. A device according to one of claims 1 to 7, **characterized in that** the cross-section of each cooling duct (21) is between 70mm² and 500mm², the cross-section of each cooling air circulation channel (17) being between 70mm² and 500mm².

9. An assembly for a turbomachine turbine, comprising at least two devices according to one of claims 1 to 8, evenly distributed around the axis of the turbomachine, preferably between two and five devices.

10. A turbofan engine, comprising a fan downstream of which the following elements extend:
- a primary section (8) in which a primary flow (F1) circulates, said primary section (8) passing through, in particular, in the direction of circulation of the primary flow (F1), a compressor, a combustion chamber and a turbine (1) comprising a turbine case (7),
- a secondary section in which a secondary flow, distinct from the primary flow, circulates
**characterized in that** the turbine comprises a cooling device (11) according to one of claims 1 to 8, located radially outside the case (7), air sampling and supply means being able to extract air from the secondary section and direct it into each cooling air circulation channel (17) and into the cooling duct (21) of the device (11).
